# EUROPEAN PATENT SPECIFICATION

(11) **EP 1 740 042 B1**
(45) Date of publication and mention of the grant of the patent: **30.03.2011**
(21) Application number: 05734528.2
(22) Date of filing: 13.04.2005
(51) Int. Cl.: A01M 29/00, E04D 13/076, E04D 13/00

(54) **APPARATUS FOR PREVENTING BIRDS ACCESSING A HABITABLE PART OF A STRUCTURE**
VORRICHTUNG ZUR VERHINDERUNG, DASS VÖGEL ZUGANG ZU EINEM BEWOHNBAREN TEIL EINER STRUKTUR HABEN
APPAREIL POUR INTERDIRE L'ACCES D'OISEAUX A UNE PARTIE HABITABLE D'UNE CONSTRUCTION

(30) Priority: 27.04.2004 GB 0409315
(43) Date of publication of application: 10.01.2007
(73) Proprietor: Holly, John Noel, Enfield, Middlesex EN2 9AA (GB)
(72) Inventor: Holly, John Noel, Enfield, Middlesex EN2 9AA (GB)
(74) Representative: Jones, Graham Henry
(86) International application number: PCT/GB2005/001426
(87) International publication number: WO 2005/104837

(56) References cited:
- WO-A-02/19819
- DE-A1- 4 236 351
- GB-A- 2 313 136
- US-A- 2 258 803
- US-A- 2 298 194
- US-A- 2 888 716

## Description

This invention relates to apparatus for preventing birds accessing a habitable part of a structure.

Birds access habitable parts of structures for the purpose of nesting, roosting or simply alighting during their daily travels. In places where there is a large bird population, the accessing of the birds to the habitable parts of the structures can cause public nuisance and/or health and safety problems. The problem is especially acute in towns and cities where structures such as bridges and building are often frequented by large numbers of pigeons. In coastal towns, a similar problem may be caused by seagulls. The public nuisance may manifest itself in parts of the structures covered with bird guano and/or persons walking under the structures receiving the bird guano on their clothes. The public health and safety problems may manifest themselves in a variety of diseases including respiratory diseases such as psittacosis. These diseases are likely to be transferred from the birds to humans via the bird guano. The transfer risk is substantial if there is a lot of the bird guano in a confined space and the confined space is visited frequently by humans.

Known attempts to provide apparatus for preventing birds accessing a habitable part of a structure have included the use of galvanised mesh and/or netting. Both mesh and netting are very visually obtrusive, and once accessed allow birds to create a build up of guano. Additionally, birds frequently become trapped in the mesh and netting, causing them to die in distressed circumstances. Further, the mesh and netting often prevent access by workmen for purposes of maintenance of the structure or, for example, electrical installation. In such cases, workmen often simply cut the netting or damage the mesh, and leave a hole for the birds to gain access, In addition, the combined weight of galvanised mesh panels may be too heavy for some parts of some structures, thereby creating unnecessary weight loadings for the structure plus Health and Safety issues.

GB 2313136 A discloses apparatus, according the preamble of claim 1, for preventing creatures and especially squirrels from accessing a habitable part of a structure. The apparatus comprises an elongate guard member which is made of a material resistant to damage by the creatures. The guard member comprises a retention region for use in retaining the guard member in place, and a sealing portion for extending across entry spaces existing between the roof and wall or guttering of the structure. The sealing portion may be U-shape wires which are maintained spaced apart by longitudinally-extending wires.

It is an aim of the present invention to obviate or reduce the above mentioned problems.

Accordingly, the present invention provides apparatus for preventing birds accessing a habitable part of a structure, which apparatus comprises barrier means for preventing the birds accessing the habitable part of the structure, and securing means for securing the barrier means to the structure, the apparatus being such that the barrier means is a rigid elongate barrier means comprising a plurality of barrier bars which are arranged side by side, a first longitudinal-extending connecting bar which is connected to a first and top part of the barrier bars and which defines a top part of the barrier means, a second longitudinal-extending connecting bar which is connected to a second and bottom part of the barrier bars and which defines a bottom part of the barrier means, and a plurality of openings which are each defined by an adjacent pair of barrier bars and the first and second longitudinally-extending connecting bars, the barrier bars being such that they are spaced apart by a distance which prevents the birds getting between the barrier bars, the barrier bars being such that in use they extend from the bottom part of the barrier means vertically upwardly and then inwardly towards the structure in order for the barrier means to extend over and cover the width of the habitable part of the structure, and the barrier bars being such that in use they extend upwardly sufficiently steeply to prevent the birds remaining on the barrier bars, characterized in that the first longitudinally-extending connecting bar is situated at one longitudinal edge of the barrier means, and the barrier bars are spaced apart by a distance which is from 10 - 100mm.

The apparatus is such that the spacing between the barrier bars ensures that the barrier bars do not unduly obscure visual access to the structure behind the barrier bars. Thus the apparatus does not unduly obscure or detract from the appearance of the structure. This is of particular importance in respect of structures (including bridges) which are Listed Buildings. The spacing between the barrier bars also allows access for cable installation and simple maintenance work.

Preferably, the barrier bars are of a small cross sectional size in order to make it difficult for birds to perch on the barrier bars.

Preferably, the barrier bars are each cranked to form a sloping portion which slopes at an angle which is less than 90° but which causes the sloping portion to slope too steeply for the birds to remain on the sloping portion.

The barrier bars may just have the sloping portion but preferably the barrier bars are each cranked to form the sloping portion and a vertical portion, the sloping portion extending from the first connecting bar downwardly to the vertical portion, and the vertical portion extending downwardly towards the second connecting bar.

The vertical portion may be attached to the second connecting bar but preferably the apparatus is one in which the vertical portion extends into a horizontal portion which is connected to the second connecting bar.

The barrier bars are preferably spaced apart by a distance of 10 - 100mm. Such a distance is especially suitable for use of the apparatus with pigeons and seagulls. Generally, the distance between the barrier bars will be chosen in dependence upon the particular type of birds mainly intended to be prevented from accessing the structure. Smaller birds than those birds to be excluded may often be able to get between the barrier bars but these smaller birds will not be birds that cause the problems requiring the presence of the apparatus of the invention.

Preferably, the barrier bars are welded to the first and second connecting bars. Other methods for fixing the barrier bars to the first and second connecting bars may be employed. The first and second connecting bars enable the entire apparatus to be rigid. They prevent the barrier bars having loose ends which might be prised apart by repeated and prolonged efforts of birds trying to get between the connecting bars. Usually, the first and second connecting bars will be connected to first and second ends of the barrier bars, but the first and second connecting bars may be connected to the barrier bars inwardly of the ends of the barrier bars if desired.

Preferably, the securing means secures the barrier means to the structure such that the barrier means is able to be moved for maintenance purposes.

The securing means may secure to the habitable part of the structure. In this case, the securing means is preferably a clamp. The clamp is preferably a G-clamp. Advantageously, the securing means such as the securing clamp is able to be undone so that the entire apparatus can be temporarily removed and resituated if unfettered access should be required to the structure, for example for maintenance or repair purposes. With securing means that secures to the habitable part of the structure, then the habitable part of the structure will usually be a ledge, for example on a bridge or on a building.

Alternatively, the securing means may secure to a part of the structure other than the habitable part. In this case, the securing means may be a pivotable securing means so that the barrier means is able to be pivoted between a closed position for preventing the birds accessing the habitable part of the structure, and an open position for permitting access for maintenance purposes. Typically, the habitable part of the structure will be a gutter, with the securing means then typically being fixed to a fascia or other vertical face of the structure.

The apparatus of the present invention may include auxiliary securing means for securing the apparatus in position in the event of a failure of part of the structure. The use of the auxiliary securing means may be especially advantageous for health and safety reasons when the apparatus of the present invention is secured to structures such as bridges which occasionally receive substantial blows as a result of vehicle accidents.

The auxiliary securing means preferably comprises a cable. Other types of auxiliary securing means may however be employed.

The apparatus of the present invention advantageously includes a spacer material on a face of the second connecting bar that is adjacent the structure, the spacer material being such as to prevent any long term adverse chemical reaction between the material of the second connecting bar and the material of the structure. Such long term adverse chemical reactions may occur when, for example, the second connecting bar is made of a metal which is different to the metal of a bridge structure to which the apparatus is attached. The spacer material may be provided on the face of the second connecting bar in the form of strips or pads. The spacer material is preferably a plastics material. A presently preferred plastics material is polyethylene or polypropylene.

The apparatus of the present invention may be made from any suitable and appropriate materials. Where the apparatus is made of a metal, then the metal is preferably stainless steel. Where the metal is stainless steel, then the stainless steel is preferably that known as grade 316. Where the apparatus is made of a plastics material, then the plastics material may be polyethylene, polypropylene or unplasticised polyvinyl chloride.

The connecting bars may be, for example, 3mm stainless steel rods. The first connecting bar may be a 3mm rod. The second connecting bar may be of greater cross sectional size than the first connecting bar because the second connecting bar is the one that is unusually connected to the structure. The connecting rod and the first connecting bar may typically be of circular cross section. The second connecting bar may typically be flat sided for giving a good connecting area to the structure. The second connecting bar may thus be rectangular or square in cross section. Where the auxiliary securing means in the form of a cable are employed, then the cable may be stainless steel wire rope, for example of the above mentioned grade 316. Where the securing means are clamps, then they are preferably help in position using threaded bolts and Nylok nuts, in order to be able to withstand vibration from traffic. This is especially desirable where the apparatus of the present invention is attached to bridges which will be subject to a certain amount of vibration from passing trains.

The sloping angle may range from 45° - 90° and more preferably 60° - 75°. The sloping angle may thus typically be 60°. In order to achieve any predetermined sloping angle, the length of the connecting bars may need to be varied in dependence upon the width of the habitable part of the structure to be protected.

The present invention also provides a structure when provided with the apparatus of the invention.

Embodiments of the invention will now be described solely by way of example and with reference to the accompanying drawings in which:
Figure 1 is a perspective view of first apparatus in use for preventing birds accessing a habitable part of a structure;
Figure 2 is an enlarged view of part of the apparatus shown in Figure 1;
Figure 3 is an exploded view of the apparatus shown in Figure 1;
Figure 4 shows second apparatus in use for preventing birds accessing a habitable part of a structure; and
Figure 5 is an end view of the apparatus as shown in Figure 4.

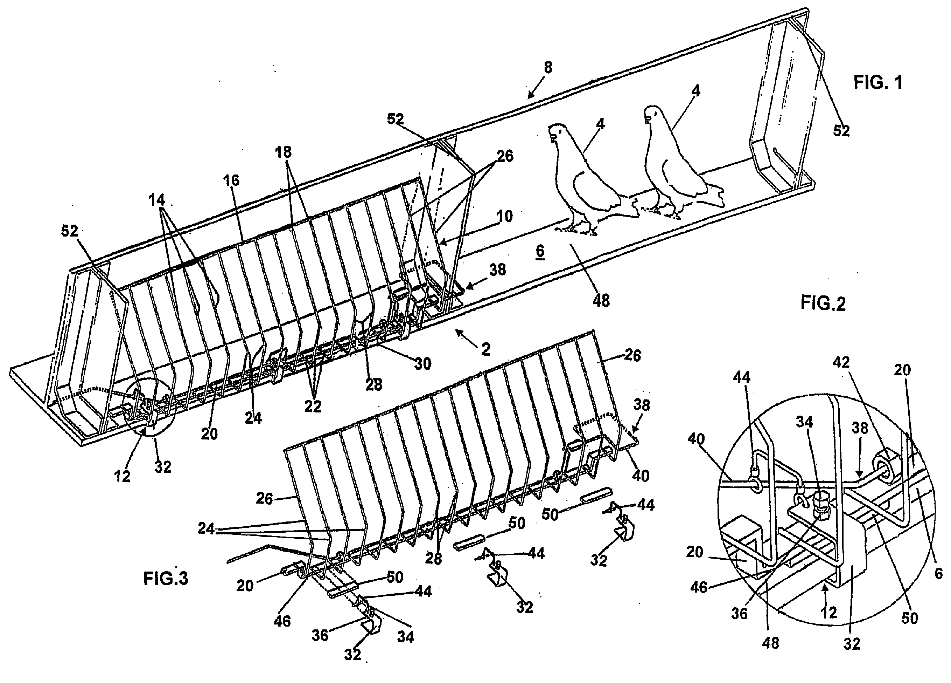

Referring to Figures 1 - 3, there is shown apparatus 2 for preventing birds 4 accessing a habitable part 6 of a structure 8. The apparatus 2 comprises barrier means 10 for preventing the birds 4 accessing the habitable part 6 of the structure 8. The apparatus 2 also comprises securing means 12 for securing the barrier means 10 to the structure 8.

The barrier means 10 comprises a plurality of barrier bars 14 which are arranged side by side. The barrier means 10 also comprises a first longitudinally-extending connecting bar 16 which is connected to a first end 18 of the barrier bars 14. The barrier means 10 further comprises a second longitudinally-extending connecting bar 20 which is connected to a second end 22 of the barrier bars 14. The barrier means 10 further comprises an open side which in use faces the structure 8, which extends the entire length of the barrier means 10, and which is defined by the barrier bars 14, the first connecting bar 16, and the second connecting bar 18.

The barrier bars 14 are such that they are spaced apart by a distance which prevents the birds getting between the barrier bars 14. The barrier bars 14 are also such that in use as shown in Figure 1 they extend both upwardly and inwardly towards the structure 8. This is in order for the barrier means 10 to extend over and cover the width of the habitable part 6 of the structure 8 with the open side of the barrier means 10 facing the structure 8. The barrier bars 14 are further such that in use as shown in Figure 1 they extend upwardly sufficiently steeply to prevent the birds 4 remaining on the barrier bars 14. The barrier bars 14 are thin so that it is difficult and/or uncomfortable for the birds 4 to perch on the barrier bars 14 for long periods.

The apparatus 2 is such that the spacing between the barrier bars 14 enables the structure 8 still easily to be seen. Easy visibility of the structure 8 is also assisted by the fact that the barrier bars 14 do not have to extend the entire height of the structure 8. Thus the apparatus 2 does not unduly obscure or detract from the appearance of the structure 8. The spacing between the barrier bars 14 also allows for work such for example as cable installation for lighting to be conducted without the need for removing the apparatus 2.

As shown in Figures 1 and 3, the barrier bars 14 are cranked at position 24. The cranking forms a sloping portion 26 which slopes at an angle which is less than 90°. As shown in Figures 1 and 3, this angle is 60°. This angle is such that it causes the sloping portion 26 to slope too steeply for the birds 4 to remain on the sloping portion. The cranking is also such that the barrier bars 14 also have a vertical portion 28. The sloping portion 26 extends from the first connecting bar 16 downwardly to the vertical portion 28. The vertical portion 28 extends downwardly towards the second connecting bar 20. The vertical portion 28 extends into a horizontal portion 30 which is connected to the second connecting bar 20.

The barrier bars 14 are spaced apart by a distance of 10 - 100mm. This distance spacing is suitable for birds 4 in the shape of the illustrated pigeons, or also for seagulls. If smaller birds are to be excluded, then the distance between the barrier bars 14 will be reduced as appropriate. Such an apparatus does not fall in the scope of the claimed invention. The barrier bars 14 are welded to the first and second connecting bars 16, 20. As can best be appreciated from Figure 3, the welding of the barrier bars 14 to the first and second connecting bars, 16, 20 enables a rigid structure to be formed.

The securing means 12 secures the barrier means 10 to the structure 8 such that the barrier means 10 is able to be moved for maintenance purposes. More specifically, the securing means 12 secures to the habitable part 6 of the structure. The securing means 10 comprises a clamp 32 as best shown in Figure 2. The clamp 32 is a G-clamp. When the clamp 32 is undone, then the entire apparatus 2 can be removed from the structure 8. The clamp 32 clamps over the second connecting bar 20 and under the habitable part 6 in order to clamp the second connecting bar 20 to the habitable part 6 of the structure 8. The habitable part 6 of the structure 8 is a ledge and the structure 8 is a bridge with only an outside girder part of the bridge being shown for simplicity of illustration. The bridge may be a railway bridge, a road bridge or any other desired type of bridge. The clamp 32 is held in position by a tightening bolt 34 and a nut 36. The nut 36 is preferably a Nylok nut which helps to avoid the bolt 34 coming undone if it is subjected to vibration as may be the case if the structure 8 is a railway bridge.

The apparatus 2 includes auxiliary securing means 38 for securing the apparatus 2 in position in the event of failure of part of the structure. The use of the auxiliary securing means 38 is especially advantageous where the structure 8 is a bridge which may be subject to vehicle crashes and thus forces that would not normally be encountered. The auxiliary securing means 38 includes a cable 40 which is connected to the apparatus 2 by passing through nuts 42 welded to the second connecting bar 20. The cable 40 is also connected to the clamp 32 by a wire 44 as shown in Figure 2.

The barrier bars 14 are typically 3mm stainless steel bars of circular cross section. The first connecting bar 16 is also typically a 3mm stainless steel bar of circular cross section. The second connecting bar 20 is also made of stainless steel but it is typically rectangular in cross section, being for example 15mm x 5mm. The second connecting bar 20 thus has a lower face 46 which is adjacent an upper face 48 of the habitable part 6 of the structure 8. The girder shown in Figure 1 as the part of the bridge structure 8 may typically be made of mild steel. In order to prevent any long term possible adverse reaction between the mild steel and the stainless steel, spacer material in the form of spacer pads 50 is employed. The spacer pads 50 are positioned as shown between the lower face 46 and the upper face 48. The spacer pads 50 are made of polyethylene or polypropylene.

The apparatus 2 is able to give effective protection from the pigeons 4 for many years without adding significant loadings to the structure 8. In addition, the apparatus 2 is such that it enables both partial and full access easily to be had to the structure 8. As shown in the drawings, the apparatus 2 is made in sections to fit between wall parts 52 of the structure 8. The apparatus 2 can be made in any appropriate lengths suitable for installation in required structures.

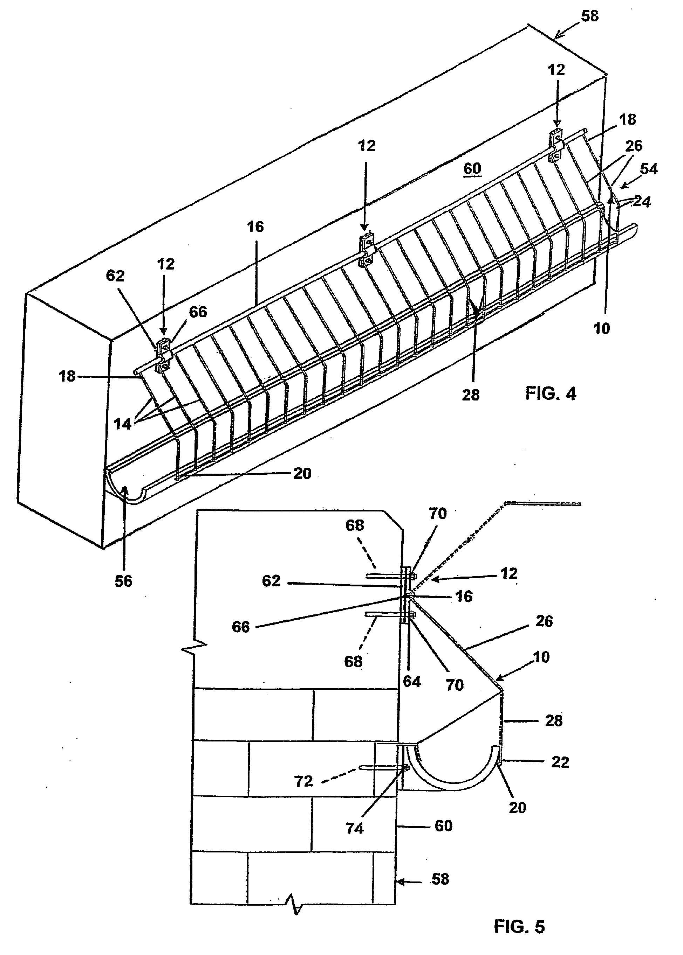

Referring now to Figures 4 and 5, there is shown second apparatus 54 for preventing birds (not shown) accessing a habitable part 56 of a structure 58. Similar parts as in Figure 1 have been given the same reference numerals for ease of comparison and understanding. In Figure 4 it will be seen that both of the first and second connecting bars 16, 20 are of circular cross section. The first connecting bar 16 is of a larger diameter than the barrier bars 14. The second connecting bar 20 is of the same diameter as the barrier bars 14. The vertical portions 28 of the barrier bars 14 connect directly to the second connecting bar 20 and there are no horizontal portions 30. The habitable part 56 is shown as a gutter and the structure 58 represents a building.

As shown in Figures 4 and 5, the securing means 12 secures the apparatus 54 to a face 60 of the structure 58. This face 60 is thus a part of the structure 58 other than the habitable part 56. The securing means 12 is a pivotable securing means so that the barrier means 10 is able to be pivoted between a closed position as shown in full lines in Figures 4 and 5 for preventing the birds accessing the habitable part 56 of the structure 58, to an open position shown in dotted lines in Figure 5 for permitting access for maintenance purposes. The securing means 12 comprises a spacer plate 62 which abuts against the face 60, and a front plate 64 which abuts against the spacer plates 62. The front plate 64 is formed to have a concave recess 66 which contains the first connecting bar 16. The spacer plate 62 and the front plate 64 are held together by bolts 68 which extend into the structure 58 and which receive nuts 70. Thus the barrier means 10 is able to be secured to the structure 58 by the securing means 12, and the securing means 12 is such that at the same time it enables the barrier means 10 to be pivoted between the closed and open positions. In the open position, cleaning of the habitable part 56 in the form of the gutter is easily able to be effected. As shown in Figure 5, the habitable part 56 is connected to the structure 58 by a bolt 72 and a nut 74.

The apparatus 54 is able to protect the habitable part 56 of the structure 58 without being either heavy or visually obtrusive. In addition, it is easily installed and easily opened for maintenance purposes. The apparatus 54 is preferably made of the same material as the apparatus 2.

It is to be appreciated that the embodiments of the invention described above with reference to the accompanying drawings have been given by way of example only and that modifications may be effected. Thus, for example, the apparatus 2, 54 may be made of metals other than stainless steel, or they may be made of plastics materials. Securing means 12 other than those illustrated may be employed. The apparatus 2, 54 may be used in situations other than those illustrated. Means other than welding may be employed for connecting the connecting bars 16, 20 to the barrier bars 14.

## Claims

1. Apparatus (2) for preventing birds (4) accessing a habitable part (6) of a structure (8), which apparatus (2) comprises barrier means (10) for preventing the birds (4) accessing the habitable part (6) of the structure (8), and securing means (12) for securing the barrier means (10) to the structure (8), the apparatus (2) being such that the barrier means (10) is a rigid elongate barrier means (10) comprising a plurality of barrier bars (14) which are arranged side by side, a first longitudinal-extending connecting bar (16) which is connected to a first and top part (18) of the barrier bars (14) and which defines a top part of the barrier means (10), a second longitudinal-extending connecting bar (20) which is connected to a second and bottom part (22) of the barrier bars (14) and which defines a bottom part of the barrier means (10), and a plurality of openings which are each defined by an adjacent pair of barrier bars (14) and the first and second longitudinally-extending connecting bars (16, 20), the barrier bars (14) being such that they are spaced apart by a distance which prevents the birds (4) getting between the barrier bars (14), the barrier bars (14) being such that in use they extend vertically from the bottom part (22) of the barrier means (10) upwardly and then inwardly towards the structure (8) in order for the barrier means (10) to extend over and cover the width of the habitable part (6) of the structure (8), and the barrier bars (14) being such that in use they extend upwardly sufficiently steeply to prevent the birds (4) remaining on the barrier bars (14), **characterized in that** the first longitudinally-extending connecting bar (16) is situated at one longitudinal edge of the barrier means (10), and the barrier bars (14) are spaced apart by a distance which is from 10 - 100mm.

2. Apparatus (2) according to claim 1 in which the barrier bars (14) are of a small cross sectional size in order to make it difficult for birds (4) to perch on the barrier bars (14).

3. Apparatus (2) according to claim 1 or claim 2 in which the barrier bars (14) are each cranked to form a sloping portion (26) which slopes at an angle which is less than 90° but which causes the sloping portion (26) to slope too steeply for the birds to remain on the sloping portion (26).

4. Apparatus (2) according to claim 3 in which the barrier bars (14) are each cranked to form the sloping portion (26) and a vertical portion (28), the sloping portion (26) extending from the first connecting bar (16) downwardly to the vertical portion (28), and the vertical portion (28) extending downwardly towards the second connecting bar (20).

5. Apparatus (2) according to claim 4 in which the vertical portion (28) extends into a horizontal portion (30) which is connected to the second connecting bar (20).

6. Apparatus (2) according to any one of the preceding claims in which the barrier bars (14) are welded to the first and second connecting bars (16,20).

7. Apparatus (2) according to any one of the preceding claims in which the securing means (12) secures the barrier means (10) to the structure (8) such that the barrier means (10) is able to be moved for maintenance purposes.

8. Apparatus (2) according to claim 7 in which the securing means (12) secures to the habitable part (6) of the structure (8).

9. Apparatus (2) according to claim 8 in which the securing means (12) is a clamp (32).

10. Apparatus (2) according to claim 7 in which the securing means (12) secures to a part of the structure (8) other than the habitable part (6).

11. Apparatus (2) according to claim 10 in which the securing means (12) is a pivotable securing means so that the barrier means (10) is able to be pivoted between a closed position for preventing the birds accessing the habitable part (6) of the structure (8), and an open position for permitting access for maintenance purposes.

12. Apparatus (2) according to any one of the preceding claims and including auxiliary securing means (38) for securing the apparatus (2) in position in the event of a failure of part of the structure (8).

13. Apparatus (2) according to claim 12 in which the auxiliary securing means (38) comprises cable.

14. Apparatus (2) according to any one of the preceding claims and including a spacer material (50) on a face of the second connecting bar (20) that is adjacent the structure (8), the spacer material (50) being such as to prevent any long term adverse chemical reaction between the material of the second connecting bar (20) and the material of the structure (8).

15. A structure (8) when provided with apparatus (2) according to any one of the preceding claims.

## Patentansprüche

1. Vorrichtung (2) zur Verhinderung, dass vögel (4) Zugang zu einem bewohnbaren Teil (6) einer Struktur (8) haben, wobei die Vorrichtung (2) ein Sperrenmittel (10) zur Verhinderung, dass die Vögel (4) Zugang zu dem bewohnbaren Teil (6) der Struktur (8) haben, und ein Befestigungsmittel (12) zur Befestigung des Sperrenmittels (10) an der Struktur (8) umfasst, wobei die Vorrichtung (2) derart ist, dass das Sperrenmittel (10) ein starres längliches Sperrenmittel (10) ist, das mehrere Sperrenstäbe (14), die nebeneinander angeordnet sind, einen ersten sich in Längsrichtung erstreckenden Verbindungsstab (16), der mit einem ersten und oberen Teil (18) der Sperrenstäbe (14) verbunden ist und einen oberen Teil des Sperrenmittels (10) definiert, einen zweiten sich in Längsrichtung ersteckenden Verbindungsstab (20), der mit einem zweiten und unteren Teil (22) der Sperrenstäbe (14) verbunden ist und einen unteren Teil des Sperrenmittels (10) definiert, und mehrere Öffnungen umfasst, die jeweils von einem benachbarten Paar Sperrenstäbe (14) und dem ersten und dem zweiten sich in Längsrichtung erstreckenden Verbindungsstab (16, 20) definiert werden, wobei die Sperrenstäbe (14) derart sind, dass sie unter Einhaltung eines Abstands beabstandet sind, durch den verhindert wird, dass die Vögel (4) zwischen die Sperrenstäbe (14) gelangen, wobei die Sperrenstäbe (14) derart sind, dass sie sich im Gebrauch vertikal vom unteren Teil (22) des Sperrenmittels (10) nach oben und dann nach innen zur Struktur (8) hin erstrecken, damit sich das Sperrenmittel (10) über die Breite des bewohnbaren Teils (6) der Struktur (8) erstreckt und diese abdeckt, und wo bei die Sperrenstäbe (14) derart sind, dass sie sich im Gebrauch ausreichend steil nach oben erstrecken, um zu verhindern, dass die Vögel (4) auf den Sperrenstäben (14) bleiben, **dadurch gekennzeichnet, dass** der erste sich in Längsrichtung erstreckende Verbindungsstab (16) an einem Längsrand des Sperrenmittels (10) angeordnet ist und die Sperrenstäbe (14) unter Einhaltung eines Abstands von 10 bis 100 mm voneinander beabstandet sind.

2. Vorrichtung (2) nach Anspruch 1, wobei die Sperrenstäbe (14) eine kleine Querschnittsgröße haben, um Vögeln (4) das Sitzen auf den Sperrenstäben (14) zu erschweren.

3. Vorrichtung (2) nach Anspruch 1 oder 2, wobei die Sperrenstäbe (14) zur Bildung eines geneigten Abschnitts (26) jeweils gekröpft sind, wobei der geneigte Abschnitt (26) in einem Winkel von weniger als 90° geneigt ist, wodurch sich der geneigte Abschnitt (26) aber zu steil neigt, als dass die Vögel auf dem geneigten Abschnitt (26) bleiben könnten.

4. Vorrichtung (2) nach Anspruch 3, wobei die Sperrenstäbe (14) zur Bildung des geneigten Abschnitts (26) und eines vertikalen Abschnitts (28) jeweils gekröpft sind, wobei sich der geneigte Abschnitt (26) vom ersten Verbindungsstab (16) nach unten zum vertikalen Abschnitt (28) erstreckt und sich der vertikale Abschnitt (28) nach unten zum zweiten Verbindungsstab (20) erstreckt.

5. Vorrichtung (2) nach Anspruch 4, wobei sich der vertikale Abschnitt (28) in einen horizontalen Abschnitt (30) erstreckt, der mit dem zweiten Verbindungsstab (20) verbunden ist.

6. Vorrichtung (2) nach einem der vorhergehenden Ansprüche, wobei die Sperrenstäbe (14) mit dem ersten und zweiten Verbindungsstab (16, 20) verschweißt sind.

7. Vorrichtung (2) nach einem der vorhergehenden Ansprüche, wobei das Befestigungsmittel (12) das Sperrenmittel (10) so an der Struktur (8) befestigt, dass das Sperrenmittel (10) zu Wartungszwecken bewegt werden kann.

8. Vorrichtung (2) nach Anspruch 7, wobei das Befestigungsmittel (12) am bewohnbaren Teil (6) der Struktur (8) befestigt ist.

9. Vorrichtung (2) nach Anspruch 8, wobei das Befestigungsmittel (12) eine Klammer (32) ist.

10. Vorrichtung (2) nach Anspruch 7, wobei das Befestigungsmittel (12) an einem anderen als dem bewohnbaren Teil (6) der Struktur (8) befestigt ist.

11. Vorrichtung (2) nach Anspruch 10, wobei das Befestigungsmittel (12) ein schwenkbares Befestigungsmittel ist, so dass das Sperrenmittel (10) zwischen einer geschlossenen Position, in der verhindert wird, dass Vögel Zugang zum bewohnbaren Teil (6) der Struktur (8) haben, und einer offenen Position, die Zugang für Wartungszwecke gewährt, geschwenkt werden kann.

12. Vorrichtung (2) nach einem der vorhergehenden Ansprüche, wobei die Vorrichtung (2) ein Hilfsbefestigungsmittel (38) aufweist, um die Vorrichtung (2) in Position zu befestigen, falls ein Teil der Struktur (8) versagt.

13. Vorrichtung (2) nach Anspruch 12, wobei das Hilfsbefestigungsmittel (38) ein Kabel umfasst.

14. Vorrichtung (2) nach einem der vorhergehenden Ansprüche, wobei die Vorrichtung (2) ein Abstandshaltermaterial (50) an einer Fläche des zweiten Verbindungsstabs (20) aufweist, das der Struktur (8) benachbart ist und das derart ist, dass es jede langfristige abträgliche chemische Reaktion zwischen dem Material des zweiten Verbindungsstabs (20) und dem Material der Struktur (8) verhindert.

15. Struktur (8), wenn sie mit einer Vorrichtung (2) nach einem der vorhergehenden Ansprüche versehen ist.

## Revendications

1. Appareil (2) pour empêcher l'accès des oiseaux (4) à une partie habitable (6) d'une structure (8), l'appareil (2) comprenant des moyens formant barrière (10) pour interdire l'accès des oiseaux (4) à la partie habitable (6) de la structure (8), et des moyens d'attache (12) permettant d'attacher les moyens formant barrière (10) à 1a structure (8), l'appareil (2) étant tel que les moyens formant barrière (10) prennent la forme de moyens formant barrière allongés rigides (10) comprenant une pluralité de barres formant barrière (14) agencées côte à côte, une première barre de liaison (16) s'étendant longitudinalement qui est reliée à une première partie supérieure (18) des barres formant barrière (14) et qui définit une partie supérieure des moyens formant barrière (10), une deuxième barre de liaison (20) s'étendant longitudinalement qui est repliée à une deuxième partie inférieure (22) des barres formant barrière (14) et qui définit une partie inférieure des moyens formant barrière (10), et une pluralité d'ouvertures qui sont chacune définies par une paire adjacente de barres formant barrière (14) et les première et deuxième barres de liaison (16, 20) s'étendant longitudinalement, les barres formant barrière (14) étant telles qu'elles sont espacées d'une distance qui empêche les oiseaux (4) de s'introduire entre les barres formant barrière (14), les barres formant barrière (14) étant telles que, en service, elles s'étendent verticalement depuis la partie inférieure (22) des moyens formant barrière (10) vers le haut puis vers l'intérieur en direction de la structure (8) de façon à ce que les moyens formant barrière (10) s'étendent par-dessus la largeur de la partie habitable (6) de la structure (8) en couvrant celle-ci, et les barres formant barrière (14) étant telles que, en service, elles s'étendent vers le haut en pente suffisamment raide pour empêcher les oiseaux (4) de demeurer sur les barres formant barrière (14),
l'appareil (2) étant **caractérisé en ce que** la première barre de liaison (16) s'étendant longitudinalement est située au niveau d'un bord longitudinal des moyens formant barrière (10), et les barres formant barrière (14) sont espacées d'une distance comprise entre 10 et 100 mm.

2. Appareil (2) selon la revendication 1, les barres formant barrière (14) possédant une section transversale de petite dimension de manière à ce que les oiseaux (4) puissent difficilement s'y percher.

3. Appareil (2) selon la revendication 1 ou la revendication 2, les barres formant barrière (14) étant chacune coudées pour former un tronçon incliné (26) dont l'angle d'inclinaison est inférieur à 90° mais néanmoins trop raide pour que les oiseaux y demeurent.

4. Appareil (2) selon la revendication 3, les barres formant barrière (14) étant chacune coudées pour former le tronçon incliné (26) et un tronçon vertical (28), le tronçon incliné (26) s'étendant depuis la première barre de liaison (16) vers le bas en direction du tronçon vertical (28), et le tronçon vertical (28) s'étendant vers le bas en direction de la deuxième barre de liaison (20).

5. Appareil (2) selon la revendication 4, le tronçon vertical (28) s'étendant dans un tronçon horizontal (30) qui est relié à la deuxième barre de liaison (20).

6. Appareil (2) selon l'une quelconque des revendications précédentes, les barres formant barrière (14) étant soudées aux première et deuxième barres de liaison (16, 20).

7. Appareil (2) selon l'une quelconque des revendications précédentes, les moyens d'attache (12) attachant les moyens formant barrière (10) à la structure (8) de façon à ce que les moyens formant barrière (10) puissent être amovibles à des fins de maintenance.

8. Appareil (2) selon la revendication 7, les moyens d'attache (12) s'attachant à la partie habitable (6) de la structure (8).

9. Appareil (2) selon la revendication 8, les moyens d'attache (12) prenant la forme d'une bride de serrage (32).

10. Appareil (2) selon la revendication 7, les moyens d'attache (12) s'attachant à une partie de la structure (8) autre que la partie habitable (6).

11. Appareil (2) selon la revendication 10, les moyens d'attache (12) prenant la forme de moyens d'attache pivotants de manière à permettre aux moyens formant barrière (10) de pivoter entre une position fermée pour interdire l'accès des oiseaux à la partie habitable (6) de la structure (8) et une position ouverte permettant l'accès à des fins de maintenance.

12. Appareil (2) selon l'une quelconque des revendications précédentes et comportant des moyens d'attache auxiliaires (38) permettant d'attacher l'appareil (2) en place en cas de défaillance d'une partie de la structure (8).

13. Appareil (2) selon la revendication 12, les moyens d'attache auxiliaires (38) comprenant un câble.

14. Appareil (2) selon l'une quelconque des revendications précédentes et comportant un matériau d'espacement (50) sur une face de la deuxième barre de liaison (20) adjacente à la structure (8), le matériau d'espacement (50) étant adapté pour empêcher toute réaction chimique indésirable à long terme entre le matériau de la deuxième barre de liaison (20) et le matériau de la structure (8).

15. Structure (8) équipée de l'appareil (2) selon l'une quelconque des revendications précédentes.
